# DEMANDE DE BREVET EUROPEEN

(11) **EP 2 022 705 A1**
(43) Date de publication de la demande: **11.02.2009**
(21) Numéro de dépôt: 08300225.3
(22) Date de dépôt: 18.06.2008
(51) Int. Cl.: B62D 25/04, B62D 25/20, B62D 43/10

(54) **Traverse arrière pour véhicule automobile**

(30) Priorité: 07.08.2007 FR 0705750
(71) Demandeur: Renault S.A.S., 92100 Boulogne-Billancourt (FR)
(72) Inventeur: Rousseau, Olivier, 91310 Linas (FR)

(57) **Abrégé**

Traverse pour plateforme de véhicule automobile, dont la section présente une partie sensiblement horizontale (11), une partie antérieure (12) s'étendant vers le haut au-dessus de la partie sensiblement horizontale (11) et se terminant par une feuillure sensiblement horizontale (14), **caractérisée en ce que** la partie arrière de la traverse liée à l'arrière de la partie sensiblement horizontale (11) présente une extrémité positionnée à une hauteur inférieure à celle de la feuillure avant (14) pour représenter un encombrement réduit en hauteur.

## Description

L'invention concerne une traverse de véhicule automobile et un agencement d'un plancher sur une telle traverse, ainsi qu'un véhicule automobile équipé d'un logement pour roue de secours combiné avec un tel agencement.

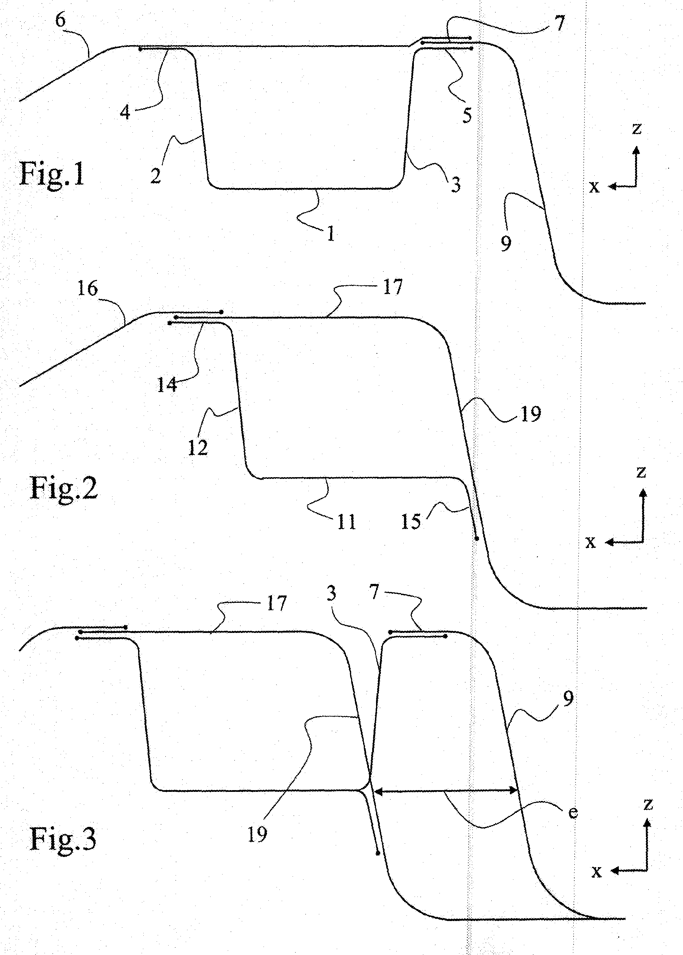

La figure 1 illustre l'agencement d'un plancher sur une traverse arrière d'un véhicule automobile selon une solution de l'état de la technique. Une telle traverse présente une section sensiblement en U, formée par deux parties verticales respectivement avant 2 et arrière 3 s'étendant vers le haut depuis une partie horizontale 1, et qui comprennent à leur extrémité une feuillure horizontale avant 4 et arrière 5. Nous entendrons par direction longitudinale x la direction dans le sens du véhicule automobile, de l'arrière vers l'avant. Nous entendrons par direction transversale y une direction horizontale et perpendiculaire à la direction longitudinale. Enfin, nous entendrons par direction verticale z la direction orientée vers le haut perpendiculaire aux deux précédentes, qui définissent un plan horizontal. Sur l'agencement représenté sur la figure 1, le plancher arrière du véhicule automobile est composé d'une partie avant 6 et d'une partie arrière. La partie avant 6 recouvre la partie ouverte supérieure de la traverse 1 pour former un corps creux fermé qui permet d'atteindre les propriétés mécaniques acceptables pour la traverse creuse ainsi formée par la combinaison de la traverse en U et de la partie avant 6 du plancher. Cette dernière est fixée par soudure sur la feuillure avant 4 de la traverse et sur la partie horizontale arrière 7 du plancher au niveau de sa liaison par soudure sur la feuillure arrière 5 de la traverse 1. Le plancher final comprend donc une triple épaisseur de tôle au niveau de la liaison des deux parties avant 6 et arrière 7 du plancher superposées sur la feuillure 5 de la traverse 1. Cet agencement forme la plateforme arrière du véhicule automobile et dans le cas des véhicules longs, la partie arrière du plancher est abaissée par une partie verticale vers le bas 9 à l'arrière de la feuillure arrière de liaison 5 avec la traverse 1 pour former un bac de réception 8 d'une roue de secours dans l'espace ainsi formé sous le niveau moyen du plancher. Pour les véhicules plus courts, la longueur disponible entre cette partie verticale 9 de la partie arrière du plancher et l'arrière du véhicule est insuffisante pour le positionnement d'une roue de secours. Deux solutions sont alors possibles :
- soit on modifie la géométrie du véhicule en reculant les roues arrières de la traverse 1 pour gagner l'espace manquant. Cette solution crée un porte à faux et des contraintes mécaniques peu souhaitables ;
- soit on positionne la roue de secours à l'extérieur du véhicule, par l'intermédiaire d'un treuil ou d'un panier fil permettant la tenue de la roue de secours. Cette solution présente l'inconvénient que la roue de secours n'est plus protégée contre le vol et la corrosion, et se salit rendant sa manipulation moins agréable pour l'utilisateur.

Il existe donc un besoin d'un nouvel agencement de la partie arrière d'un véhicule automobile permettant notamment un positionnement amélioré de la roue de secours pour les véhicules de plus petite taille.

Pour cela, l'invention propose une traverse pour plateforme de véhicule automobile, dont la section présente une partie sensiblement horizontale, une partie antérieure s'étendant vers le haut au-dessus de la partie sensiblement horizontale et se terminant par une feuillure, caractérisée en ce que la partie arrière de la traverse, liée à l'arrière de la partie sensiblement horizontale, présente une extrémité positionnée à une hauteur inférieure à celle de la feuillure avant pour représenter un encombrement réduit en hauteur.

La partie sensiblement horizontale peut se terminer par une feuillure arrière s'étendant vers le bas.

L'invention porte aussi sur un agencement pour plancher arrière de véhicule automobile, caractérisé en ce qu'il comprend une traverse telle que décrite ci-dessus, en ce qu'il comprend une partie arrière de plancher qui comprend une partie horizontale fixée sur la feuillure avant de la traverse et s'étendant vers l'arrière et vers le bas par une partie inclinée vers le bas fixée sur une feuillure arrière de la traverse.

Cet agencement pour plancher arrière de véhicule automobile peut comprendre une partie avant de plancher arrière, dont l'extrémité est fixée au niveau de la feuillure avant de la traverse, en superposition de la traverse et de la partie arrière du plancher.

Dans cet agencement, l'ensemble formé par les deux parties horizontales et inclinées de la traverse et les deux parties horizontales et inclinées du plancher arrière représente un corps creux rigide de support pour une plateforme d'un véhicule automobile.

La partie arrière du plancher peut s'étendre vers le bas sous la partie horizontale de la traverse avant de s'étendre horizontalement vers l'arrière, afin de former un logement positionné sous le niveau du plancher pour une roue de secours.

L'invention porte aussi sur un véhicule automobile comprenant une plateforme comprenant un agencement pour plancher arrière tel que décrit ci-dessus s'étendant sur la direction transversale du véhicule automobile, la partie verticale de la partie arrière du plancher délimitant un logement pour roue de secours au moins partiellement sous le niveau moyen du plancher et s'étendant dans la zone du coffre arrière du véhicule.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente schématiquement en coupe selon un plan longitudinal vertical l'agencement d'un plancher arrière d'un véhicule automobile sur une traverse selon l'état de la technique;
la figure 2 représente schématiquement en coupe selon un plan longitudinal vertical l'agencement d'un plancher arrière d'un véhicule automobile sur une traverse selon un mode d'exécution de l'invention ;
la figure 3 représente schématiquement en coupe selon un plan longitudinal vertical l'écart entre l'agencement selon l'invention et l'agencement de l'état de la technique.

L'invention repose sur une modification de la géométrie de la traverse, qui permet d'avancer la partie arrière du plancher et de gagner ainsi de l'espace à l'arrière de cette traverse, particulièrement utile pour l'aménagement d'un logement pour une roue de secours ou plus généralement d'un coffre de rangement. Avec la traverse de l'invention, la partie arrière du plancher est fixée sur la feuillure antérieure haute de la traverse et non plus sur la feuillure haute arrière, qui est au moins partiellement supprimée.

En effet, la traverse selon un mode d'exécution de l'invention, illustrée en coupe sur la figure 2 dont l'axe longitudinal x représenté indique que l'avant se trouve sur la gauche de la figure, comprend une partie sensiblement horizontale 11 et une partie antérieure 12 sensiblement verticale orientée vers le haut se terminant par une feuillure sensiblement horizontale 14. Ces parties sont similaires à celles de la traverse de l'état de la technique décrite précédemment. La partie arrière de la partie sensiblement horizontale 11 se termine par une feuillure arrière 15 sensiblement verticale s'étendant vers le bas. Cette traverse ne comprend plus de partie arrière verticale s'étendant vers le haut selon ce mode d'exécution.

Cette traverse permet un agencement pour un plancher arrière de véhicule automobile tel que représenté sur la figure 2, comprenant une partie arrière de plancher qui comprend une partie horizontale 17 fixée sur la feuillure avant 14 de la traverse et s'étendant vers l'arrière, reliée à une partie sensiblement verticale 19 s'étendant vers le bas fixée sur la feuillure arrière 15 de la traverse. Enfin, le plancher arrière se prolonge en avant de la traverse par une partie avant 16 du plancher qui vient se fixer sur la partie arrière du plancher au niveau de la feuillure avant 14 de la traverse. Toutes ces fixations peuvent se faire par soudure ou tout autre moyen équivalent.

Dans cet agencement pour plancher arrière de véhicule automobile, l'ensemble formé par les deux parties horizontales 11 et verticales 12 de la traverse et les deux parties horizontales 17 et verticales 19 du plancher arrière crée un corps creux rigide adapté pour sa fonction de traverse s'étendant transversalement selon la direction y sur la plateforme d'un véhicule automobile.

D'autre part, un tel agencement permet de gagner de l'espace dans la partie du véhicule située à l'arrière de la traverse, au niveau du coffre arrière du véhicule automobile. La figure 3 illustre ce gain d'espace en superposant la solution de la figure 2 avec la traverse classique de l'état de la technique de la figure 1. Le gain d'espace est mesuré par la distance e entre les parties verticales 9, 19 des deux solutions. Il est de l'ordre de quelques centimètres, environ 6 centimètres sur le mode d'implémentation. Cette différence permet d'augmenter le volume d'un bac de rangement situé à l'arrière de la traverse, délimité par la partie arrière 19 du plancher qui s'étend sous le niveau moyen du plancher correspondant à la feuillure haute 14 de la traverse et même sous la partie horizontale 11 de la traverse, pour notamment permettre de loger des roues de secours pour de nombreux véhicules de petite ou moyenne longueur. Ce gain de quelques centimètres a ainsi un impact important sur l'aménagement intérieur d'un véhicule automobile. L'invention est particulièrement utile pour les véhicules automobiles de petite et moyenne taille. Elle permet toutefois un gain d'espace sur tous les véhicules et peut être implémentée avantageusement sur tous les véhicules automobiles.

Le gain dans la direction longitudinale x de la solution est dû au passage d'un accostage horizontal sur la feuillure 7 à un accostage vertical sur la feuillure 15. L'important est que la partie arrière de la traverse, reliée à sa partie horizontale 11, présente une hauteur inférieure à celle de la feuillure avant 14, soit au moins partiellement effacée pour permettre d'avancer la partie arrière du plancher malgré la présence de sa partie inclinée vers le bas 19. D'autre part, les parties dites sensiblement verticales dans tout le texte peuvent présenter des inclinaisons relativement importantes par rapport à la verticale, de l'ordre de 20 degrés par exemple, sans sortir du concept de l'invention. Il faut donc entendre par sensiblement vertical toutes ces variantes inclinées. Les différentes feuillures de fixation de la traverse peuvent présenter des formes ou orientations différentes. Enfin, les différentes parties de l'agencement peuvent se trouver dans des matériaux divers, tels que ceux utilisés dans l'état de la technique.

Finalement, la solution atteint bien les objets recherchés et permet d'augmenter la possibilité de loger les roues de secours de manière protégée à l'intérieur d'un plus grand nombre de véhicules automobiles.

## Revendications

1. Traverse pour plateforme de véhicule automobile, dont la section présente une partie sensiblement horizontale (11), une partie antérieure (12) s'étendant vers le haut au-dessus de la partie sensiblement horizontale (11) et se terminant par une feuillure (14), **caractérisée en ce que** la partie arrière de la traverse, liée à l'arrière de la partie sensiblement horizontale (11), présente une extrémité positionnée à une hauteur inférieure à celle de la feuillure avant (14) pour représenter un encombrement réduit en hauteur.

2. Traverse pour plateforme de véhicule automobile selon la revendication 1, **caractérisée en ce que** la partie sensiblement horizontale (11) se termine par une feuillure arrière (15) s'étendant vers le bas.

3. Agencement pour plancher arrière de véhicule automobile, **caractérisé en ce qu'**il comprend une traverse selon une des revendications précédentes, **en ce qu'**il comprend une partie arrière de plancher qui comprend une partie horizontale (17) fixée sur la feuillure avant (14) de la traverse et s'étendant vers l'arrière et vers le bas par une partie inclinée vers le bas (19) fixée sur une feuillure arrière (15) de la traverse.

4. Agencement pour plancher arrière de véhicule automobile selon la revendication précédente, **caractérisé en ce qu'**il comprend une partie avant (16) de plancher arrière, dont l'extrémité est fixée au niveau de la feuillure avant (14) de la traverse, en superposition de la traverse et de la partie arrière (17) du plancher.

5. Agencement pour plancher arrière de véhicule automobile selon la revendication 3 ou 4, **caractérisé en ce que** l'ensemble formé par les deux parties horizontales (11) et inclinées (12) de la traverse et les deux parties horizontales (17) et inclinées (19) du plancher arrière représente un corps creux rigide de support pour une plateforme d'un véhicule automobile.

6. Agencement pour plancher arrière de véhicule automobile selon l'une des revendications 3 à 5, **caractérisé en ce que** la partie arrière (19) du plancher s'étend vers le bas sous la partie horizontale (11) de la traverse avant de s'étendre horizontalement vers l'arrière, afin de former un logement positionné sous le niveau du plancher pour une roue de secours.

7. Véhicule automobile comprenant une plateforme comprenant un agencement pour plancher arrière selon l'une des revendications 3 à 6 s'étendant sur la direction transversale du véhicule automobile, la partie verticale (19) de la partie arrière du plancher délimitant un logement pour roue de secours au moins partiellement sous le niveau moyen du plancher et s'étendant dans la zone du coffre arrière du véhicule.
